# EUROPEAN PATENT SPECIFICATION

(11) **EP 4 635 738 B1**
(45) Date of publication and mention of the grant of the patent: **18.02.2026**
(21) Application number: 24196160.6
(22) Date of filing: 23.08.2024
(51) Int. Cl.: B32B 41/00, B32B 37/06

(54) **LAMINATOR AND LAMINATION METHOD**
LAMINIERVORRICHTUNG UND LAMINIERVERFAHREN
DISPOSITIF DE STRATIFICATION ET PROCÉDÉ DE STRATIFICATION

(30) Priority: 18.04.2024 CN 202420815688 U
(43) Date of publication of application: 22.10.2025
(73) Proprietor: Dongguan Jiaxi Office Machine Co., Ltd., Dongguan, Guangdong (CN)
(72) Inventor: ZHENG, Haocai, Dongguan City (CN)
(74) Representative: Cleanthous, Marinos

(56) References cited:
- WO-A1-2023/010596
- JP-A- 2013 095 117
- US-A- 5 746 878

## Description

### TECHNICAL FIELD

The present disclosure relates to the technical field of lamination for paper, and in particular, to a laminator and a lamination method.

### BACKGROUND OF THE INVENTION

A laminator is a device for performing hot pressing on a surface of a product such as a piece of paper using a lamination film to achieve a sealing function, a waterproof function, and other functions. The laminator is widely used in places such as an office, a copy shop, and a photography club. People may usually laminate important documents, photos, stamps, souvenirs, and other paper products with lamination films to effectively protect these paper products.

At present, most of the existing laminators on the market have a cold roller and a hot roller. The hot roller is arranged on a front side of the cold roller. A piece to be laminated and a lamination film first pass through the hot roller and then pass through the cold roller. However, this type of product needs to be preheated during use. After being preheated, the product can be used to perform a lamination operation only when the hot roller reaches a lamination temperature. It is particularly inconvenient to use. People need to wait a long time because of using the product intermittently. If the product is kept in a continuously standby state to ensure that the hot roller is always in the lamination temperature, a waste of energy may be caused, and the service life of the product may also be shortened.

US 5746878 discloses a variable speed, constant temperature laminator which includes a slot with a terminal portion for receiving perfect binders, rollers for applying heat and pressure to items to be laminated therebetween, a channel for feeding the items to be laminated between the rollers, a heater disposed along a length of the channel terminating in at least one arcuate fin member disposed closely adjacent to and at least partially about the rollers. WO2023/010596 A1 discloses a preheating-free laminator, wherein a film feeding detection apparatus, a feed driving apparatus, a film feeding roller set and a heating assembly are electrically connected to a control apparatus, respectively. JP2013095117 discloses increasing a rising speed of lamination temperature and to stably maintain the lamination temperature without using a temperature detector.

For this purpose, the present disclosure provides a laminator and a lamination method, which can effectively solve the above problems. The laminator has a simple structure and can be directly used, without waiting for preheating.

### SUMMARY OF THE INVENTION

In order to overcome the shortcomings of the prior art, the present invention provides a laminator as defined in claim 1. The laminator has a simple structure and can be directly used, without waiting for preheating.

The technical solution adopted by the present disclosure to solve the technical problem is as follows.

A laminator, includes:
a main body, wherein the main body is provided with a feeding port, a discharging port, and a lamination space arranged between the feeding port and the discharging port;
a guide roller, wherein the guide roller is arranged on one side, close to the feeding port, in the main body;
a heating assembly, wherein the heating assembly is arranged in the lamination space, and the heating assembly is configured to heat a lamination film and a piece to be laminated; and
a lamination roller, wherein the lamination roller is arranged in the lamination space and configured to roll and fix the lamination film; a preheating space is further arranged between the guide roller and the lamination roller; the preheating space is communicated to the lamination space; the preheating space is configured to allow the lamination film and the piece to be laminated to pass through; and a distance h between the guide roller and the lamination roller is greater than a preset distance H.

As the improvement of the present disclosure, the main body includes an upper mounting member and a lower mounting member; the upper mounting member is connected to the lower mounting member; the preheating space is formed between the upper mounting member and the lower mounting member; the upper mounting member and the lower mounting member are each provided with a thermal conductive plate; the thermal conductive plate extends along a surface of the upper mounting member and/or a surface of the lower mounting member towards the guide roller; and the preheating space is formed between the two thermal conductive plates.

As the improvement of the present disclosure, first guide portions are arranged at end portions of the thermal conductive plates, and the two first guide portions extend in a manner of facing away from each other.

As the improvement of the present disclosure, the upper mounting member and the lower mounting member are each provided with a guide plate; a guide channel is formed between the two guide plates; and the guide channel is opposite to the discharging port.

As the improvement of the present disclosure, second guide portions are arranged on one sides of the two guide plates facing the lamination roller, and the two second guide portions extend in a manner of facing away from each other.

According to the invention, the laminator further includes a driving device, wherein the driving device is arranged in the main body and is connected to the lamination roller and the guide roller through a gear set; and the driving device drives the lamination roller and the guide roller to rotate.

According to the invention, the laminator further includes a temperature detection device and a control device, wherein the temperature detection device is arranged in the main body; the temperature detection device detects a temperature t in the lamination space and outputs a first electrical signal; the control device is electrically connected to the temperature detection device and the driving device; and the control device is configured to: receive the first electrical signal generated by the temperature detection device and adjust a rotation speed of the driving device according to the first electrical signal.

As the improvement of the present disclosure, the temperature detection device is further configured to: detect whether the temperature t in the lamination space is less than a preset temperature T, and output a second electrical signal when the temperature t in the lamination space is less than the preset temperature T; and the control device receives the second electrical signal and controls the heating assembly to perform heating.

As the improvement of the present disclosure, the heating assembly includes a plurality of heating members; and the heating members are arranged around the lamination roller.

As the improvement of the present disclosure, the laminator further includes a supporting plate, wherein the supporting plate is arranged on one side of the main body close to the discharging port and extends along a plane where the discharging port is located, and an upper surface of the supporting plate is arranged below the discharging port.

The present invention also provides a lamination method as defined in claim 9.

The method includes:
providing a laminator, which includes:
a main body, wherein the main body is provided with a feeding port, a discharging port, and a lamination space arranged between the feeding port and the discharging port;
a guide roller, wherein the guide roller is arranged on one side, close to the feeding port, in the main body;
a heating assembly, wherein the heating assembly is arranged in the lamination space, and the heating assembly is configured to heat a lamination film and a piece to be laminated; and
a lamination roller, wherein the lamination roller is arranged in the lamination space and configured to roll and fix the lamination film; a preheating space is further arranged between the guide roller and the lamination roller; the preheating space is communicated to the lamination space; the preheating space is configured to allow the lamination film and the piece to be laminated to pass through; and a distance h between the guide roller and the lamination roller is greater than a preset distance H;
inserting the lamination film and the piece to be laminated along the feeding port, wherein the heating assembly performs heating to make temperatures in the lamination space and the preheating space rise; the guide roller guides the lamination film and the piece to be laminated into the lamination space along the preheating space; and the lamination roller rolls and fixes the lamination film and the piece to be laminated.

As the improvement of the present disclosure, the main body includes an upper mounting member and a lower mounting member; the upper mounting member is connected to the lower mounting member; the preheating space is formed between the upper mounting member and the lower mounting member; the upper mounting member and the lower mounting member are each provided with a thermal conductive plate; the thermal conductive plate extends along a surface of the upper mounting member and/or a surface of the lower mounting member towards the guide roller; and the preheating space is formed between the two thermal conductive plates.

As the improvement of the present disclosure, first guide portions are arranged at end portions of the thermal conductive plates, and the two first guide portions extend in a manner of facing away from each other.

As the improvement of the present disclosure, the upper mounting member and the lower mounting member are each provided with a guide plate; a guide channel is formed between the two guide plates; and the guide channel is opposite to the discharging port.

As the improvement of the present disclosure, second guide portions are arranged on one sides of the two guide plates facing the lamination roller, and the two second guide portions extend in a manner of facing away from each other.

According to the invention, the laminator further includes a driving device, wherein the driving device is arranged in the main body and is connected to the lamination roller and the guide roller through a gear set; and the driving device drives the lamination roller and the guide roller to rotate.

According to the invention, the laminator further includes a temperature detection device and a control device, wherein the temperature detection device is arranged in the main body; the temperature detection device detects a temperature t in the lamination space and outputs a first electrical signal; the control device is electrically connected to the temperature detection device and the driving device; and the control device is configured to:
receive the first electrical signal generated by the temperature detection device and adjust a rotation speed of the driving device according to the first electrical signal.

According to the invention, , the temperature detection device is further configured to: detect whether the temperature t in the lamination space is less than a preset temperature T, and output a second electrical signal when the temperature t in the lamination space is less than the preset temperature T; and the control device receives the second electrical signal and controls the heating assembly to perform heating.

As the improvement of the present disclosure, the heating assembly includes a plurality of heating members; and the heating members are arranged around the lamination roller.

As the improvement of the present disclosure, the laminator further includes a supporting plate, wherein the supporting plate is arranged on one side of the main body close to the discharging port and extends along a plane where the discharging port is located, and an upper surface of the supporting plate is arranged below the discharging port.

The present disclosure has the following beneficial effects. By the arrangement of the above structure, during use, the piece to be laminated and the lamination film are placed along the feeding port. At this time, the heating assembly works, and temperatures of the lamination roller, the lamination space, and the preheating space gradually increase. The guide roller rotates to guide the piece to be laminated and the lamination film into the preheating space. In the preheating space, temperatures of the piece to be laminated and the lamination film gradually increase. When the guide roller transfers the piece to be laminated and the lamination film to the lamination roller, the distance traveled by the lamination film and the piece to be laminated is h. The heating assembly performs heating to make the temperature of the lamination roller and the temperature in the lamination space to rise to a first lamination temperature te1. At this temperature, the lamination film is melted, and the lamination roller presses and fixes the lamination film onto the piece to be laminated. During use, there is no need to turn on the laminator and wait for the lamination roller to reach the lamination temperature. The lamination film and the piece to be laminated can be directly placed into the feeding port. At the time when the guide roller transfers the lamination film and the piece to be laminated, the lamination roller can reach the first lamination temperature te1 to achieve lamination, so that it is convenient for a user to use the laminator. Preferably, the preset distance H is 4 CM. When the distance h between the guide roller and the lamination roller is greater than 4 CM, the lamination roller can be heated to the first lamination temperature te1 within the time when the guide roller transfers lamination film and the piece to be laminated.

### BRIEF DESCRIPTION OF DRAWINGS

In order to explain the technical solutions of the embodiments of the present disclosure more clearly, the following will briefly introduce the accompanying drawings used in the embodiments. The drawings in the following description are only some embodiments of the present disclosure. Those of ordinary skill in the art can obtain other drawings based on these drawings without creative work.

The present disclosure is further described below in detail in combination with the accompanying drawings and embodiments.
FIG. 1 is a schematic diagram of an entire structure of the present disclosure in an angle;
FIG. 2 is a schematic diagram of an entire structure of the present disclosure in another angle;
FIG. 3 is a structural exploded diagram of the present disclosure in an angle;
FIG. 4 is a structural exploded diagram of the present disclosure in another angle;
FIG. 5 is a schematic diagram of a cross-sectional structure according to the present disclosure;
FIG. 6 is a schematic diagram of a relationship between a temperature te and time ti during running of a laminator of the present disclosure; and
FIG. 7 is a schematic diagram of a relationship between a speed v of a driving device and time ti during running of a laminator of the present disclosure.

### DETAILED DESCRIPTION OF THE INVENTION

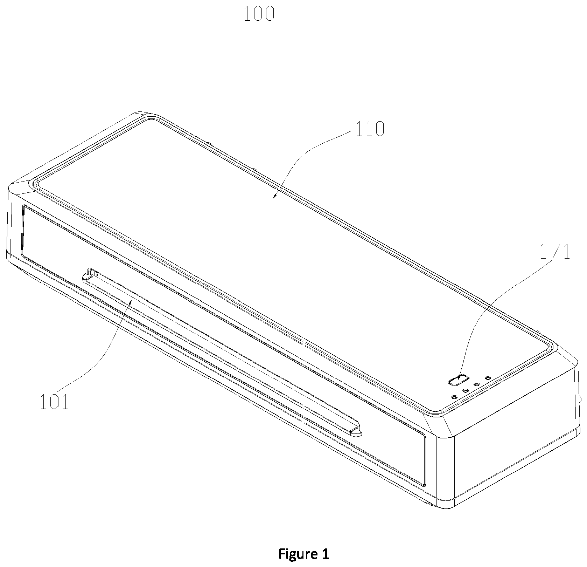

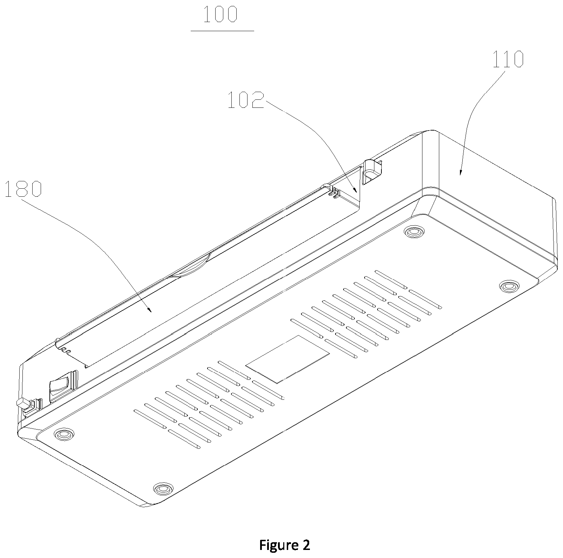

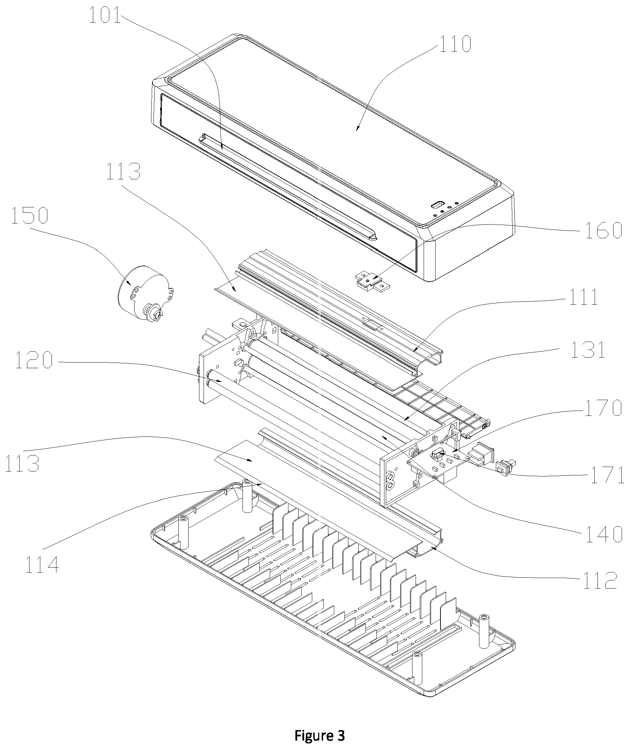

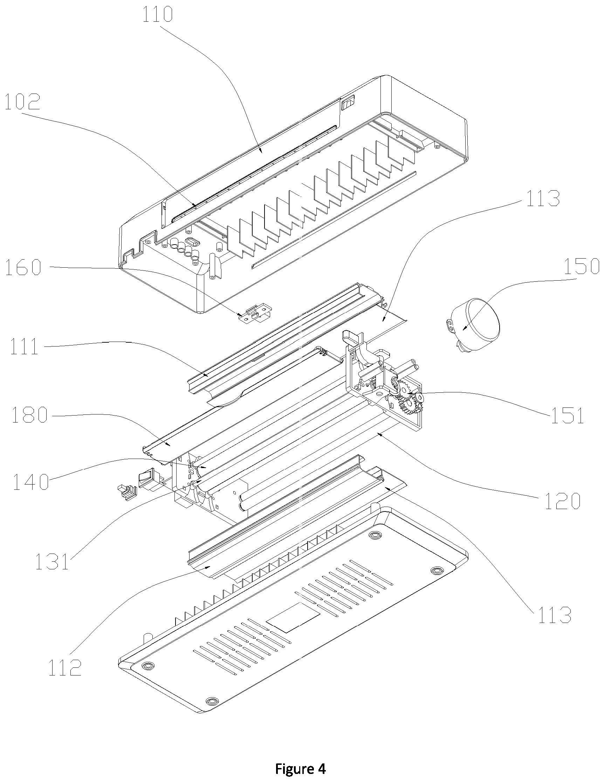

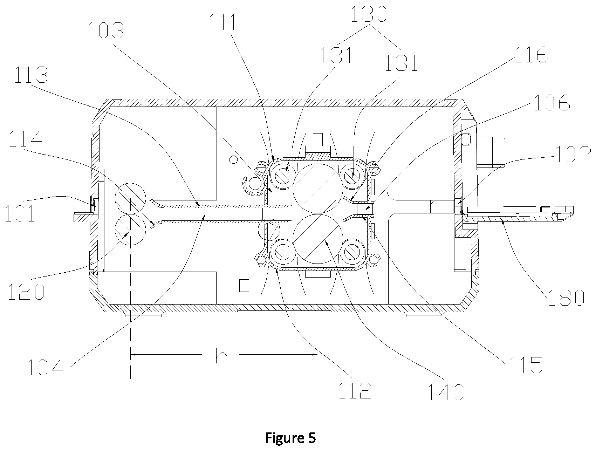

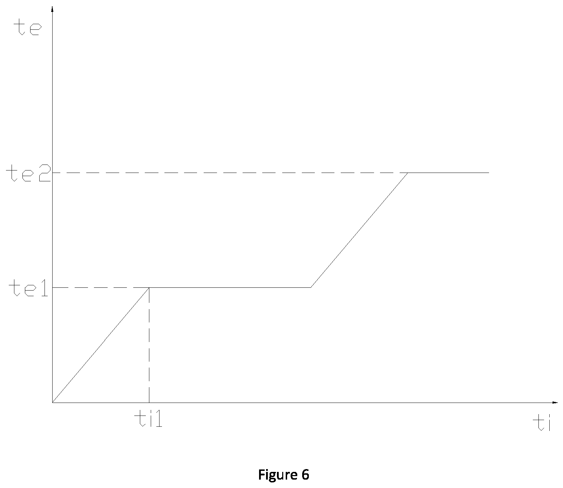

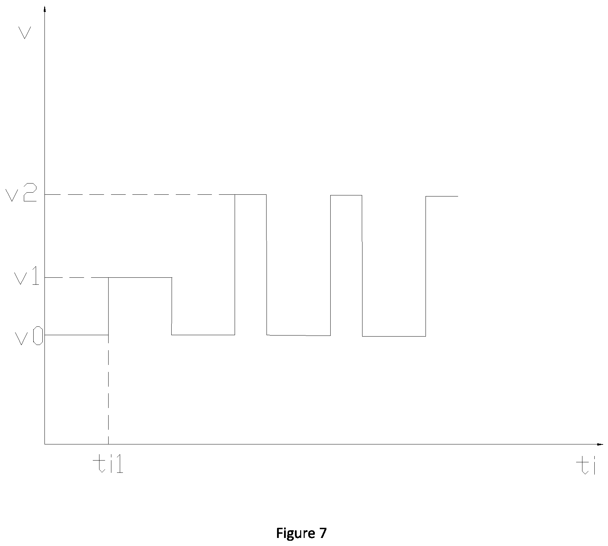

Referring to FIG. 1 to FIG. 7, a laminator includes:
a main body 110, wherein the main body 110 is provided with a feeding port 101, a discharging port 102, and a lamination space 103 arranged between the feeding port 101 and the discharging port 102;
a guide roller 120, wherein the guide roller 120 is arranged on one side, close to the feeding port 101, in the main body 110;
a heating assembly 130, wherein the heating assembly 130 is arranged in the lamination space 103, and the heating assembly 130 is configured to heat a lamination film and a piece to be laminated; and
a lamination roller 140, wherein the lamination roller 140 is arranged in the lamination space 103 and configured to roll and fix the lamination film; a preheating space 104 is further arranged between the guide roller 120 and the lamination roller 140; the preheating space 104 is communicated to the lamination space 103; the preheating space 104 is configured to allow the lamination film and the piece to be laminated to pass through; and a distance h between the guide roller 120 and the lamination roller 140 is greater than a preset distance H.

By the arrangement of the above structure, during use, the piece to be laminated and the lamination film are placed along the feeding port 101. At this time, the heating assembly 130 works, and temperatures of the lamination roller 140, the lamination space 103, and the preheating space 104 gradually increase. The guide roller 120 rotates to guide the piece to be laminated and the lamination film into the preheating space 104. In the preheating space 104, temperatures of the piece to be laminated and the lamination film gradually increase. When the guide roller 120 transfers the piece to be laminated and the lamination film to the lamination roller 140, the distance traveled by the lamination film and the piece to be laminated is h. The heating assembly 130 performs heating to make the temperature of the lamination roller 140 and the temperature in the lamination space 103 to rise to a first lamination temperature te1. At this temperature, the lamination film is melted, and the lamination roller 140 presses and fixes the lamination film onto the piece to be laminated. During use, there is no need to turn on the laminator and wait for the lamination roller to reach the lamination temperature. The lamination film and the piece to be laminated can be directly placed into the feeding port. At the time when the guide roller transfers the lamination film and the piece to be laminated, the lamination roller 140 can reach the first lamination temperature te1 to achieve lamination, so that it is convenient for a user to use the laminator. Preferably, the preset distance H is 4 CM. When the distance h between the guide roller 120 and the lamination roller 140 is greater than 4 CM, the lamination roller 140 can be heated to the first lamination temperature te1 within the time ti1 when the guide roller transfers lamination film and the piece to be laminated.

In this embodiment, the main body 110 includes an upper mounting member 111 and a lower mounting member 112; the upper mounting member 111 is connected to the lower mounting member 112; the preheating space 104 is formed between the upper mounting member 111 and the lower mounting member 112; the upper mounting member 111 and the lower mounting member 112 are each provided with a thermal conductive plate 113; the thermal conductive plate 113 extends along a surface of the upper mounting member 111 and/or a surface of the lower mounting member 112 towards the guide roller 120; and the preheating space 104 is formed between the two thermal conductive plates 113. By the arrangement of the above structure, the upper mounting member 111 and the lower mounting member 112 are connected to form the roughly sealed preheating space 104, so that the heating assembly 130 and the lamination roller 140 can be accommodated in the preheating space 104. On the one hand, the heating assembly 130 and the lamination roller 140 can be protected, and can be prevented from contaminated by external debris, and the heating efficiency can also be improved, enabling the lamination roller 140 to reach the lamination temperature faster. The thermal conductive plates 113 protruding out of the surface of the upper mounting member 111 and/or the surface of the lower mounting member 112 can conduct heat, and the preheating space 104 formed between the two thermal conductive plates can preheat the lamination film and the piece to be laminated to increase their temperatures, so that the temperatures of the lamination film and the piece to be laminated can reach the lamination temperature during the lamination of the lamination roller 140, and the lamination efficiency of the product can be improved.

In this embodiment, first guide portions 114 are arranged at end portions of the thermal conductive plates 113, and the two first guide portions 114 extend in a manner of facing away from each other. By the arrangement of the above structure, the two first guide portions 114 extend in the manner of facing away from each other, so that a trumpet-shaped opening is formed at an entrance of the preheating space 104. During use, when the guide roller 120 transfers the lamination film and the piece to be laminated, the lamination film and the piece to be laminated can enter the preheating space 104 more easily and are prevented from being stuck at the entrance of the preheating space 104, so that the use efficiency of the product is improved, and the fault rate is reduced.

In this embodiment, the upper mounting member 111 and the lower mounting member 112 are each provided with a guide plate 115; a guide channel 105 is formed between the two guide plates 115; and the guide channel 105 is opposite to the discharging port 102. By the arrangement of the above structure, the guide plates 115 are arranged at a lower end of the upper mounting member 111 and an upper end of the lower mounting member 112. The two guide plates 115 are arranged opposite to each other, forming the guide channel 105 between the two guide plates. This can allow the lamination film and the piece to be laminated which are fixed by hot pressing to be gradually transferred along the guide channel 105 and finally discharged along the discharging port 102, thereby making it convenient for the user to obtain a final laminated finished product, preventing the lamination film and the piece to be laminated from being stuck in front of the discharging port 102, and improving the lamination efficiency of the product.

In this embodiment, second guide portions 116 are arranged on one sides of the two guide plates 115 facing the lamination roller 140, and the two second guide portions 116 extend in a manner of facing away from each other. By the arrangement of the above structure, during use, the two second guide portions 116 that are arranged in the manner of facing away from each other form a trumpet-shaped opening which directly faces the lamination roller 140. After the lamination film and the piece to be laminated are hot pressed for lamination by the lamination roller 140, the lamination film and the piece to be laminated enter the guide channel 105 along the opening and are then transferred to the discharging port 102 along the guide channel 105. This can smoothly export the laminated piece, prevent jamming and other faults, and improve the use efficiency of the product.

In this embodiment, the laminator further includes a driving device 150, wherein the driving device 150 is arranged in the main body 110 and is connected to the lamination roller 140 and the guide roller 120 through a gear set 151; and the driving device 150 drives the lamination roller 140 and the guide roller 120 to rotate. By the arrangement of the above structure, an output end of the driving device 150 rotates to drive the gear set 151, which in turn drives the lamination roller 140 and the guide roller 120 to rotate. There are two lamination rollers 140. The two lamination rollers 140 are arranged opposite to each other at the top and bottom, and have opposite rotation directions. Similarly, there are also two guide rollers 120. The two guide rollers 120 are arranged opposite to each other at the top and bottom, and have two rotation directions.

In this embodiment, the laminator further includes a temperature detection device 160 and a control device 170, wherein the temperature detection device 160 is arranged in the main body 110; the temperature detection device 160 detects a temperature t in the lamination space 103 and outputs a first electrical signal; the control device 170 is electrically connected to the temperature detection device 160 and the driving device 150; and the control device 170 is configured to: receive the first electrical signal generated by the temperature detection device 160 and adjust a rotation speed of the driving device 150 according to the first electrical signal. By the arrangement of the above structure, during use, the piece to be laminated and the lamination film are placed along the feeding port 101. The driving device 150 runs at a preset initial rotation speed v0. At this time, the heating assembly 130 works, and temperatures of the lamination roller 140, the lamination space 103, and the preheating space 104 gradually increase. The guide roller 120 rotates to guide the piece to be laminated and the lamination film into the preheating space 104. In the preheating space 104, temperatures of the piece to be laminated and the lamination film gradually increase. When the guide roller 120 transfers the piece to be laminated and the lamination film to the lamination roller 140, the distance traveled by the lamination film and the piece to be laminated is h. The heating assembly 130 performs heating to make the temperature of the lamination roller 140 and the temperature in the lamination space 103 to rise to a first lamination temperature te1. The temperature detection device 160 detects the first lamination temperature te1 at this time and outputs the first electrical signal, and the control device 170 adjusts the rotation speed of the driving device 150 to v1 according to this signal. The degree of melting of the lamination film varies at different temperatures. When the temperature is low, to ensure a tight connection between the lamination film and the piece to be laminated, the lamination roller 140 needs to press the lamination film onto the piece to be laminated for a longer period of time. Therefore, the control device 170 controls the driving device 150 to reduce the rotation speed to prolong contact time between the lamination roller 140 and the lamination film, as well as the piece to be laminated, improve the success rate of lamination, and ensure the lamination effect. When the lamination of a group of lamination film and piece to be laminated is completed, a next group of lamination film and piece to be laminated enters along the feeding port. At this time, the heating assembly 130 continues to work, causing the temperature of the lamination roller 140 and the temperature in the lamination space 103 to continue to rise. When the piece to be laminated of the next group reaches the lamination roller 140, the lamination roller 140 has a higher lamination temperature te2. At this time, the rotation speed of the driving device 150 can be increased to v2 to improve the lamination efficiency. Preferably, the control device 170 is further provided with a button 171. The user can select, through the button, different modes corresponding to different thicknesses of the lamination film. The control device 170 may adjust the rotation speed of the driving device 150. Generally, a thicker lamination film requires a higher lamination temperature and longer time required for the lamination roller to be in contact with and hot press the lamination film. Therefore, when the lamination film is thicker, the control device 170 controls the driving device 150 to reduce the rotation speed.

In this embodiment, the temperature detection device 160 is further configured to: detect whether the temperature t in the lamination space 103 is less than a preset temperature T, and output a second electrical signal when the temperature t in the lamination space 103 is less than the preset temperature T; and the control device 170 receives the second electrical signal and controls the heating assembly 130 to perform heating. By the arrangement of the above structure, during use, when the lamination film and the piece to be laminated pass through the lamination roller 140, the lamination film and the piece to be laminated may absorb a certain amount of heat, causing the temperature on a surface of the lamination roller 140 to decrease. When detecting a decrease in the temperature, the temperature detection device 160 may output the second electrical signal. The control device 170 may control the heating assembly 130 to work, causing the temperature on the surface of the lamination roller 140 to rise again to the lamination temperature, so that the temperature is maintained near the lamination temperature to ensure the temperature stability, thus ensuring the lamination effect.

In this embodiment, the heating assembly 130 includes a plurality of heating members 131; and the heating members 131 are arranged around the lamination roller 140. By the arrangement of the above structure, the plurality of heating members 131 are arranged around the lamination roller 140, which can enhance the heating effect and make the temperature in the lamination space 103 uniform, thereby making a good lamination effect. Preferably, the heating members 131 are high-power heating members such as heating tubes, which can increase the heating rate and improve the lamination effect.

In this embodiment, the laminator further includes a supporting plate 180, wherein the supporting plate 180 is arranged on one side of the main body 110 close to the discharging port 102 and extends along a plane where the discharging port 102 is located, and an upper surface of the supporting plate 180 is arranged below the discharging port 102. By the arrangement of the above structure, during use, the piece to be laminated and the lamination film are laminated by the lamination roller 140 and discharged along the guide channel 105 and the discharging port 102. The supporting plate 180 can effectively support the laminated piece and prevent the piece to be laminated from being contaminated or damaged.

Referring to FIG. 1 to FIG. 7, a lamination method includes:
providing a laminator 100, which includes:
a main body 110, wherein the main body 110 is provided with a feeding port 101, a discharging port 102, and a lamination space 103 arranged between the feeding port 101 and the discharging port 102;
a guide roller 120, wherein the guide roller 120 is arranged on one side, close to the feeding port 101, in the main body 110;
a heating assembly 130, wherein the heating assembly 130 is arranged in the lamination space 103, and the heating assembly 130 is configured to heat a lamination film and a piece to be laminated; and
a lamination roller 140, wherein the lamination roller 140 is arranged in the lamination space 103 and configured to roll and fix the lamination film; a preheating space 104 is further arranged between the guide roller 120 and the lamination roller 140; the preheating space 104 is communicated to the lamination space 103; the preheating space 104 is configured to allow the lamination film and the piece to be laminated to pass through; and a distance h between the guide roller 120 and the lamination roller 140 is greater than a preset distance H;
inserting the lamination film and the piece to be laminated along the feeding port 101, wherein the heating assembly 130 performs heating to make temperatures in the lamination space 103 and the preheating space 104 rise; the guide roller 120 guides the lamination film and the piece to be laminated into the lamination space 103 along the preheating space 104; and the lamination roller 140 rolls and fixes the lamination film and the piece to be laminated.

By the arrangement of the above structure, during use, the piece to be laminated and the lamination film are placed along the feeding port 101. At this time, the heating assembly 130 works, and temperatures of the lamination roller 140, the lamination space 103, and the preheating space 104 gradually increase. The guide roller 120 rotates to guide the piece to be laminated and the lamination film into the preheating space 104. In the preheating space 104, temperatures of the piece to be laminated and the lamination film gradually increase. When the guide roller 120 transfers the piece to be laminated and the lamination film to the lamination roller 140, the distance traveled by the lamination film and the piece to be laminated is h. The heating assembly 130 performs heating to make the temperature of the lamination roller 140 and the temperature in the lamination space 103 to rise to a first lamination temperature te1. At this temperature, the lamination film is melted, and the lamination roller 140 presses and fixes the lamination film onto the piece to be laminated. During use, there is no need to turn on the laminator and wait for the lamination roller to reach the lamination temperature. The lamination film and the piece to be laminated can be directly placed into the feeding port. At the time when the guide roller transfers the lamination film and the piece to be laminated, the lamination roller 140 can reach the first lamination temperature te1 to achieve lamination, so that it is convenient for a user to use the laminator. Preferably, the preset distance H is 4 CM. When the distance h between the guide roller 120 and the lamination roller 140 is greater than 4 CM, the lamination roller 140 can be heated to the first lamination temperature te1 within the time when the guide roller transfers lamination film and the piece to be laminated.

In this embodiment, the main body 110 includes an upper mounting member 111 and a lower mounting member 112; the upper mounting member 111 is connected to the lower mounting member 112; the preheating space 104 is formed between the upper mounting member 111 and the lower mounting member 112; the upper mounting member 111 and the lower mounting member 112 are each provided with a thermal conductive plate 113; the thermal conductive plate 113 extends along a surface of the upper mounting member 111 and/or a surface of the lower mounting member 112 towards the guide roller 120; and the preheating space 104 is formed between the two thermal conductive plates 113. By the arrangement of the above structure, the upper mounting member 111 and the lower mounting member 112 are connected to form the roughly sealed preheating space 104, so that the heating assembly 130 and the lamination roller 140 can be accommodated in the preheating space 104. On the one hand, the heating assembly 130 and the lamination roller 140 can be protected, and can be prevented from contaminated by external debris, and the heating efficiency can also be improved, enabling the lamination roller 140 to reach the lamination temperature faster. The thermal conductive plates 113 protruding out of the surface of the upper mounting member 111 and/or the surface of the lower mounting member 112 can conduct heat, and the preheating space 104 formed between the two thermal conductive plates can preheat the lamination film and the piece to be laminated to increase their temperatures, so that the temperatures of the lamination film and the piece to be laminated can reach the lamination temperature during the lamination of the lamination roller 140, and the lamination efficiency of the product can be improved.

In this embodiment, first guide portions 114 are arranged at end portions of the thermal conductive plates 113, and the two first guide portions 114 extend in a manner of facing away from each other. By the arrangement of the above structure, the two first guide portions 114 extend in the manner of facing away from each other, so that a trumpet-shaped opening is formed at an entrance of the preheating space 104. During use, when the guide roller 120 transfers the lamination film and the piece to be laminated, the lamination film and the piece to be laminated can enter the preheating space 104 more easily and are prevented from being stuck at the entrance of the preheating space 104, so that the use efficiency of the product is improved, and the fault rate is reduced.

In this embodiment, the upper mounting member 111 and the lower mounting member 112 are each provided with a guide plate 115; a guide channel 105 is formed between the two guide plates 115; and the guide channel 105 is opposite to the discharging port 102. By the arrangement of the above structure, the guide plates 115 are arranged at a lower end of the upper mounting member 111 and an upper end of the lower mounting member 112. The two guide plates 115 are arranged opposite to each other, forming the guide channel 105 between the two guide plates. This can allow the lamination film and the piece to be laminated which are fixed by hot pressing to be gradually transferred along the guide channel 105 and finally discharged along the discharging port 102, thereby making it convenient for the user to obtain a final laminated finished product, preventing the lamination film and the piece to be laminated from being stuck in front of the discharging port 102, and improving the lamination efficiency of the product.

In this embodiment, second guide portions 116 are arranged on one sides of the two guide plates 115 facing the lamination roller 140, and the two second guide portions 116 extend in a manner of facing away from each other. By the arrangement of the above structure, during use, the two second guide portions 116 that are arranged in the manner of facing away from each other form a trumpet-shaped opening which directly faces the lamination roller 140. After the lamination film and the piece to be laminated are hot pressed for lamination by the lamination roller 140, the lamination film and the piece to be laminated enter the guide channel 105 along the opening and are then transferred to the discharging port 102 along the guide channel 105. This can smoothly export the laminated piece, prevent jamming and other faults, and improve the use efficiency of the product.

In this embodiment, the laminator 100 further includes a driving device 150, wherein the driving device 150 is arranged in the main body 110 and is connected to the lamination roller 140 and the guide roller 120 through a gear set 151; and the driving device 150 drives the lamination roller 140 and the guide roller 120 to rotate. By the arrangement of the above structure, an output end of the driving device 150 rotates to drive the gear set 151, which in turn drives the lamination roller 140 and the guide roller 120 to rotate. There are two lamination rollers 140. The two lamination rollers 140 are arranged opposite to each other at the top and bottom, and have opposite rotation directions. Similarly, there are also two guide rollers 120. The two guide rollers 120 are arranged opposite to each other at the top and bottom, and have two rotation directions.

In this embodiment, the laminator 100 further includes a temperature detection device 160 and a control device 170, wherein the temperature detection device 160 is arranged in the main body 110; the temperature detection device 160 detects a temperature t in the lamination space 103 and outputs a first electrical signal; the control device 170 is electrically connected to the temperature detection device 160 and the driving device 150; and the control device 170 is configured to: receive the first electrical signal generated by the temperature detection device 160 and adjust a rotation speed of the driving device 150 according to the first electrical signal. By the arrangement of the above structure, during use, the piece to be laminated and the lamination film are placed along the feeding port 101. The driving device 150 runs at a preset initial rotation speed v0. At this time, the heating assembly 130 works, and temperatures of the lamination roller 140, the lamination space 103, and the preheating space 104 gradually increase. The guide roller 120 rotates to guide the piece to be laminated and the lamination film into the preheating space 104. In the preheating space 104, temperatures of the piece to be laminated and the lamination film gradually increase. When the guide roller 120 transfers the piece to be laminated and the lamination film to the lamination roller 140, the distance traveled by the lamination film and the piece to be laminated is h. The heating assembly 130 performs heating to make the temperature of the lamination roller 140 and the temperature in the lamination space 103 to rise to a first lamination temperature te1. The temperature detection device 160 detects the first lamination temperature te1 at this time and outputs the first electrical signal, and the control device 170 adjusts the rotation speed of the driving device 150 to v1 according to this signal. The degree of melting of the lamination film varies at different temperatures. When the temperature is low, to ensure a tight connection between the lamination film and the piece to be laminated, the lamination roller 140 needs to press the lamination film onto the piece to be laminated for a longer period of time. Therefore, the control device 170 controls the driving device 150 to reduce the rotation speed to prolong contact time between the lamination roller 140 and the lamination film, as well as the piece to be laminated, improve the success rate of lamination, and ensure the lamination effect. When the lamination of a group of lamination film and piece to be laminated is completed, a next group of lamination film and piece to be laminated enters along the feeding port. At this time, the heating assembly 130 continues to work, causing the temperature of the lamination roller 140 and the temperature in the lamination space 103 to continue to rise. When the piece to be laminated of the next group reaches the lamination roller 140, the lamination roller 140 has a higher lamination temperature te2. At this time, the rotation speed of the driving device 150 can be increased to v2 to improve the lamination efficiency. Preferably, the control device 170 is further provided with a button 171. The user can select, through the button, different modes corresponding to different thicknesses of the lamination film. The control device 170 may adjust the rotation speed of the driving device 150. Generally, a thicker lamination film requires a higher lamination temperature and longer time required for the lamination roller to be in contact with and hot press the lamination film. Therefore, when the lamination film is thicker, the control device 170 controls the driving device 150 to reduce the rotation speed.

In this embodiment, the temperature detection device 160 is further configured to: detect whether the temperature t in the lamination space 103 is less than a preset temperature T, and output a second electrical signal when the temperature t in the lamination space 103 is less than the preset temperature T; and the control device 170 receives the second electrical signal and controls the heating assembly 130 to perform heating. By the arrangement of the above structure, during use, when the lamination film and the piece to be laminated pass through the lamination roller 140, the lamination film and the piece to be laminated may absorb a certain amount of heat, causing the temperature on a surface of the lamination roller 140 to decrease. When detecting a decrease in the temperature, the temperature detection device 160 may output the second electrical signal. The control device 170 may control the heating assembly 130 to work, causing the temperature on the surface of the lamination roller 140 to rise again to the lamination temperature, so that the temperature is maintained near the lamination temperature to ensure the temperature stability, thus ensuring the lamination effect.

In this embodiment, the heating assembly 130 includes a plurality of heating members 131; and the heating members 131 are arranged around the lamination roller 140. By the arrangement of the above structure, the plurality of heating members 131 are arranged around the lamination roller 140, which can enhance the heating effect and make the temperature in the lamination space 103 uniform, thereby making a good lamination effect. Preferably, the heating members 131 are high-power heating members such as heating tubes, which can increase the heating rate and improve the lamination effect.

In this embodiment, the laminator 100 further includes a supporting plate 180, wherein the supporting plate 180 is arranged on one side of the main body 110 close to the discharging port 102 and extends along a plane where the discharging port 102 is located, and an upper surface of the supporting plate 180 is arranged below the discharging port 102. By the arrangement of the above structure, during use, the piece to be laminated and the lamination film are laminated by the lamination roller 140 and discharged along the guide channel 105 and the discharging port 102. The supporting plate 180 can effectively support the laminated piece and prevent the piece to be laminated from being contaminated or damaged.

## Claims

1. A laminator, comprising:
a main body (110), wherein the main body (110) is provided with a feeding port (101), a discharging port (102), and a lamination space (103) arranged between the feeding port (101) and the discharging port (102);
a guide roller (120), wherein the guide roller (120) is arranged on one side, close to the feeding port (101), in the main body (110);
a heating assembly (130), wherein the heating assembly (130) is arranged in the lamination space (103), and the heating assembly (130) is configured to heat a lamination film and a piece to be laminated; and
a lamination roller (140), wherein the lamination roller (140) is arranged in the lamination space (103) and configured to roll and fix the lamination film; a preheating space (104) is further arranged between the guide roller (120) and the lamination roller (140); the preheating space (104) is communicated to the lamination space (103); the preheating space (104) is configured to allow the lamination film and the piece to be laminated to pass through; and a distance h between the guide roller (120) and the lamination roller (140) is greater than a preset distance H;
a driving device (150), wherein the driving device (150) is arranged in the main body (110) and is connected to the lamination roller (140) and the guide roller (120) through a gear set (151); and
the driving device (150) drives the lamination roller (140) and the guide roller (120) to rotate; a temperature detection device (160) and a control device (170), wherein the temperature detection device (160) is arranged in the main body (110); the temperature detection device (160) detects a temperature t in the lamination space (103) and outputs a first electrical signal;
the control device (170) is electrically connected to the temperature detection device (160) and the driving device (150); and the control device (170) is configured to: receive the first electrical signal generated by the temperature detection device (160) and adjust a rotation speed of the driving device (150) according to the first electrical signal.

2. The laminator according to claim 1, wherein the main body (110) comprises an upper mounting member (111) and a lower mounting member (112); the upper mounting member (111) is connected to the lower mounting member (112); the preheating space (104) is formed between the upper mounting member (111) and the lower mounting member (112); the upper mounting member (111) and the lower mounting member (112) are each provided with a thermal conductive plate (113); the thermal conductive plate (113) extends along a surface of the upper mounting member (111) and/or a surface of the lower mounting member (112) towards the guide roller (120); and the preheating space (104) is formed between the two thermal conductive plates (113).

3. The laminator according to claim 2, wherein first guide portions (114) are arranged at end portions of the thermal conductive plates (113), and the two first guide portions (114) extend in a manner of facing away from each other.

4. The laminator according to claim 2, wherein the upper mounting member (111) and the lower mounting member (112) are each provided with a guide plate (115); a guide channel (105) is formed between the two guide plates (115); and the guide channel (105) is opposite to the discharging port (102).

5. The laminator according to claim 4, wherein second guide portions (116) are arranged on one sides of the two guide plates (115) facing the lamination roller (140), and the two second guide portions (116) extend in a manner of facing away from each other.

6. The laminator according to claim 1,
wherein the temperature detection device (160) is further configured to: detect whether the temperature t in the lamination space (103) is less than a preset temperature T, and output a second electrical signal when the temperature t in the lamination space (103) is less than the preset temperature T; and the control device (170) receives the second electrical signal and controls the heating assembly (130) to perform heating.

7. The laminator according to claim 1, wherein the heating assembly (130) comprises a plurality of heating members (131); and the heating members (131) are arranged around the lamination roller (140).

8. The laminator according to claim 7, further comprising a supporting plate (180), wherein the supporting plate (180) is arranged on one side of the main body (110) close to the discharging port (102) and extends along a plane where the discharging port (102) is located, and an upper surface of the supporting plate (180) is arranged below the discharging port (102).

9. A lamination method, comprising:
providing a laminator (100), which comprises:
a main body (110), wherein the main body (110) is provided with a feeding port (101), a discharging port (102), and a lamination space (103) arranged between the feeding port (101) and the discharging port (102);
a guide roller (120), wherein the guide roller (120) is arranged on one side, close to the feeding port (101), in the main body (110);
a heating assembly (130), wherein the heating assembly (130) is arranged in the lamination space (103), and the heating assembly (130) is configured to heat a lamination film and a piece to be laminated; and
a lamination roller (140), wherein the lamination roller (140) is arranged in the lamination space (103); a preheating space (104) is further arranged between the guide roller (120) and the lamination roller (140); the preheating space (104) is communicated to the lamination space (103); a distance h between the guide roller (120) and the lamination roller (140) is greater than a preset distance H;
inserting the lamination film and the piece to be laminated along the feeding port (101),
wherein the heating assembly (130) performs heating to make temperatures in the lamination space (103) and the preheating space (104) rise; the guide roller (120) guides the lamination film and the piece to be laminated into the lamination space (103) along the preheating space (104);
and the lamination roller (140) rolls and fixes the lamination film and the piece to be laminated; wherein the laminator (100) further comprises a driving device (150), a temperature detection device (160) and a control device (170), wherein the driving device (150) is arranged in the main body (110) and is connected to the lamination roller (140) and the guide roller (120) through a gear set (151); and the driving device (150) drives the lamination roller (140) and the guide roller (120) to rotate; and wherein the temperature detection device (160) is arranged in the main body (110); the temperature detection device (160) detects a temperature t in the lamination space (103) and outputs a first electrical signal; the control device (170) is electrically connected to the temperature detection device (160) and the driving device (150); and the control device (170) is configured to: receive the first electrical signal generated by the temperature detection device (160) and adjust a rotation speed of the driving device (150) according to the first electrical signal; wherein the temperature detection device (160) is further configured to: detect whether the temperature t in the lamination space (103) is less than a preset temperature T,
and output a second electrical signal when the temperature t in the lamination space (103) is less than the preset temperature T; and the control device (170) receives the second electrical signal and controls the heating assembly (130) to perform heating.

10. The lamination method according to claim 9, wherein the main body (110) comprises an upper mounting member (111) and a lower mounting member (112); the upper mounting member (111) is connected to the lower mounting member (112); the preheating space (104) is formed between the upper mounting member (111) and the lower mounting member (112); the upper mounting member (111) and the lower mounting member (112) are each provided with a thermal conductive plate (113); the thermal conductive plate (113) extends along a surface of the upper mounting member (111) and/or a surface of the lower mounting member (112) towards the guide roller (120); and the preheating space (104) is formed between the two thermal conductive plates (113).

11. The lamination method according to claim 10, wherein first guide portions (114) are arranged at end portions of the thermal conductive plates (113), and the two first guide portions (114) extend in a manner of facing away from each other; wherein the upper mounting member (111) and the lower mounting member (112) are each provided with a guide plate (115); a guide channel (105) is formed between the two guide plates (115); and the guide channel (105) is opposite to the discharging port (102); wherein second guide portions (116) are arranged on one sides of the two guide plates (115) facing the lamination roller (140), and the two second guide portions (116) extend in a manner of facing away from each other.

12. The lamination method according to claim 9, wherein the heating assembly (130) comprises a plurality of heating members (131); and the heating members (131) are arranged around the lamination roller (140); wherein the laminator (100) further comprises a supporting plate (180), wherein the supporting plate (180) is arranged on one side of the main body (110) close to the discharging port (102) and extends along a plane where the discharging port (102) is located, and an upper surface of the supporting plate (180) is arrangedbelow the discharging port (102).

## Patentansprüche

1. Ein Laminator, der folgende Komponenten umfasst:
ein Hauptkörper (110), der mit einem Zuführungsanschluss (101), einem Auslassanschluss (102) sowie einem Zwischenraum (103) zwischen dem Zuführungsanschluss (101) und dem Auslassanschluss (102) ausgestattet ist;
ein Führungswalz (120), wobei der Führungswalz (120) auf einer Seite des Hauptkörpers (110) in der N ähe des Zuführports (101) angeordnet ist;
eine Heizvorrichtung (130), die im Laminationsraum (103) angeordnet ist und dazu konfiguriert ist, ein Laminationsfilm sowie ein zu laminierendes Objekt zu erwärmen; und
ein Laminierwalz (140), wobei der Laminierwalz (140) im Laminierraum angeordnet ist (103) und so konfiguriert, dass das Laminationsfilm rollt und fixiert wird; zwischen dem Führungsroller (120) und dem Laminationsroller (140) ist zudem ein Vorwärmraum (104) vorgesehen; der Vorwä rmraum
(104) wird an den Laminierraum (103) geleitet; der Vorwärmraum (104) ist so konfiguriert, dass das Laminationsfilmmaterial und das zu laminierende Stück durchströmen können; und die Abstandshöhe h zwischen dem Führungswalz (120) und dem Laminierwalz (140) ist größer als eine vordefinierte Abstandsh öhe H; ein Antriebseinrichtung (150), das im Hauptkörper (110) angeordnet ist und über eine Getriebesetzung (151) mit dem Laminierwalz (140) und dem Führungswalz (120) verbunden ist;und das Antriebseinrichtung (150) treibt den Schichtwalzer (140) sowie den Führungswalzer (120) zur Drehung an;
ein Temperaturmessgerät (160) und eine Steuerungseinrichtung (170), wobei das Temperaturmessgerät (160) im Hauptkörper (110) angeordnet ist; das Temperaturmessgerät (160) detektiert eine Temperatur t im Laminationsraum (103) und gibt ein erstes elektrisches Signal aus;
die Steuereinheit (170) ist elektrisch mit der Temperaturmessvorrichtung (160) und der Antriebsvorrichtung (150) verbunden; und die Steuereinheit (170) ist so konfiguriert, das von der Temperaturmessvorrichtung (160) erzeugte erste elektrische Signal zu empfangen und die Drehzahl der Antriebsvorrichtung (150) entsprechend diesem Signal anzupassen.

2. Der Laminator gemäß Anspruch 1, wobei der Hauptkörper (110) einen oberen Befestigungselement (111) und ein unteres Befestigungselement (112) umfasst; das obere Befestigungselement (111) ist mit dem unteren Befestigungselement (112) verbunden; der Vorwärmraum (104) ist zwischen dem oberen Befestigungselement (111) und dem unteren Befestigungselement (112) vorgesehen; sowohl das obere als auch das untere Befestigungselement (111, 112) sind jeweils mit einer wärmeleitenden Platte (113) ausgestattet; die wärmeleitende Platte (113) erstreckt sich entlang einer Oberfläche des oberen montierendes Element (111) und/oder eine Oberfläche des unteren montierenden Elements (112) in Richtung des Führungsrollen (120); der Vorwärmraum (104) ist zwischen den beiden wärmeleitenden Platten (113) gebildet.

3. Das Laminator gemäß Anspruch 2, wobei erste Führungselemente (114) an den Enden der wä rmeleitenden Platten (113) angeordnet sind und die beiden ersten Führungselemente (114) so angeordnet sind, dass sie sich gegenseitig entgegenzustellen.

4. Das Laminator gemäß Anspruch 2, wobei das obere Befestigungselement (111) und das untere Befestigungselement (112) jeweils mit einer Führungsscheibe (115) ausgestattet sind; zwischen den beiden Führungsscheiben (115) ist ein Führungskanal (105) vorgesehen; und der Führungskanal (105) ist gegenüber dem Entladeport (102) angeordnet.

5. Das Laminator gemäß Anspruch 4, wobei zweite Führungselemente (116) an einer Seite der beiden Fü hrungselemente (115) angeordnet sind, die dem Laminationsroller (140) zugewandt sind, und diese zweiten Führungselemente (116) so angeordnet sind, dass sie sich gegenseitig voneinander entfernen.

6. Das Laminator gemäß Anspruch 1, wobei das Temperaturmessgerät (160) weiterhin dazu ausgelegt ist, zu ü berprüfen, ob die Temperatur t im Laminierraum (103) unter einer vordefinierten Temperatur T liegt, und ein zweites elektrisches Signal auszugeben, sobald die Temperatur t im Laminierraum (103) unter der vordefinierten Temperatur T liegt; das Steuergerät (170) empfängt dieses zweite elektrische Signal und steuert die Heizvorrichtung (130) zur Erwärmung.

7. Das Laminator gemäß Anspruch 1, wobei die Heizvorrichtung (130) mehrere Heizelemente (131) umfasst, die um den Laminationsroller (140) angeordnet sind.

8. Das Laminator gemäß Anspruch 7, weiterhin umfassend eine Tragplatte (180), wobei die Tragplatte (180) an einer Seite des Hauptkörpers (110) nahe dem Auslass (102) angeordnet ist und sich entlang der Ebene erstreckt, in der sich der Auslass (102) befindet, wobei die Oberfläche der Tragplatte (180) unterhalb des Auslasses (102 liegt.

9. Eine Verfahrensmethode zur Schichtung, die folgende Schritte umfasst:
ein Laminator (100) bereitstellend, der folgende Komponenten umfasst:
ein Hauptkörper (110), der mit einem Zuführungsanschluss (101), einem Auslassanschluss (102) sowie einem Zwischenraum (103) zwischen dem Zuführungsanschluss (101) und dem Auslassanschluss (102) ausgestattet ist;
ein Führungswalz (120), wobei der Führungswalz (120) auf einer Seite des Hauptkörpers (110) in der N ähe des Zuführports (101) angeordnet ist;
eine Heizvorrichtung (130), die im Laminationsraum (103) angeordnet ist und dazu konfiguriert ist, ein Laminationsfilm sowie ein zu laminierendes Objekt zu erwärmen; und
ein Laminierwalz (140), wobei der Laminierwalz (140) im Laminierraum (103) angeordnet ist; zwischen dem Führungswalz (120) und dem Laminierwalz (140) ist zudem ein Vorwärmraum (104) vorgesehen,
der mit dem Laminierraum verbunden ist (103) Die Entfernung h zwischen dem Führungsroller (120) und dem Laminationsroller (140) ist größer als die vordefinierte Entfernung H.
Die Aufnahme des Laminationsfilms und des zu laminierenden Stücks entlang des Zuführports (101) erfolgt, wobei die Heizvorrichtung (130) die Temperaturen im Laminationsraum (103) und im Vorheizraum (104) erhöht; der Führungswalz (120) lenkt den Laminationsfilm und das zu laminierende Stück entlang des Vorheizraums (104) in den Laminationsraum (103); und der Laminationswalz (140) rollt den Laminationsfilm und das zu laminierende Stück und fixiert sie.wobei der Laminator (100) zudem eine Antriebseinrichtung (150), eine Temperaturmessungseinrichtung (160) und eine Steuerungseinrichtung (170) umfasst, wobei die Antriebseinrichtung (150) im Hauptkörper (110) angeordnet ist und über ein Getriebesatz (151) mit dem Laminationsrollen (140) und dem Fü hrungskurbel (120) verbunden ist; wobei die Antriebseinrichtung (150) die Laminationsrollen (140) und den Führungskurbel (120) antreibt; und wobei die Temperaturmessungseinrichtung (160) im Hauptkö rper (110) angeordnet ist;Das Temperaturmessgerät (160) erfasst die Temperatur t im Laminationsraum (103) und sendet ein erstes elektrisches Signal aus; das Steuergerät (170) ist elektrisch mit dem Temperaturmessgerät (160) und dem Antrieb (150) verbunden; und das Steuergerätce (170) ist so konfiguriert, das erste elektrische Signal vom Temperaturmessgerät (160) zu empfangen und die Drehzahl des Antriebsgeräts (150) entsprechend diesem Signal anzupassen. Das Temperaturmessgerät (160) ist zudem dazu ausgelegt, zu überprüfen, ob die Temperatur t im Laminationsraum (103) unter einer vordefinierten Temperatur T liegt, und ein zweites elektrisches Signal zu erzeugen, wenn die Temperatur t im Laminationsraum (103) unter der vordefinierten Temperatur T liegt.und das Steuerelement (170) empfängt das zweite elektrische Signal und steuert die Heizvorrichtung (130), um die Heizung auszuführen.

10. Die Laminierverfahren gemäß Anspruch 9, wobei der Hauptkörper (110) einen oberen Befestigungselement (111) und ein unteres Befestigungselement (112) umfasst; das obere Befestigungselement (111) ist mit dem unteren Befestigungselement (112) verbunden; der Vorwärmraum (104) ist zwischen dem oberen Befestigungselement (111) und dem unteren Befestigungselement (112) gebildet; der obere Sowohl das oberste Montageelement (111) als auch das untere Montageelement (112) sind jeweils mit einer thermisch leitfähigen Platte (113) ausgestattet; diese erstreckt sich entlang der Oberfläche des oberen Montagelements (111) und/oder der Oberfläche des unteren Montagelements (112) in Richtung des Führungskugels (120); zwischen den beiden thermisch leitfähigen Platten (113) bildet sich der Vorwärmraum (104).

11. Die Laminierverfahren gemäß Anspruch 10, wobei erste Führungselemente (114) an den Enden der wä rmeleitenden Platten (113) angeordnet sind und die beiden ersten Führungselemente (114) so angeordnet sind, dass sie sich gegenseitig gegenüber weisen; wobei das obere Befestigungselement (111) und das untere Befestigungselement (112) jeweils eine Führungsebene (115) aufweisen; zwischen den beiden Führungsebenen (115) ein Führungskanal (105) gebildet ist; und der Führungskanal (105) gegenüber dem Entladeport (102) positioniert ist.wobei zweite Führungselemente (116) an den Seiten der beiden Führungselemente (115) angeordnet sind, die dem Laminationsroller (140) zugewandt sind, und diese zweiten Führungselemente (116) sich gegenseitig voneinander entfernt ausrichten.

12. Die Laminierverfahren gemäß Anspruch 9, wobei die Heizvorrichtung (130) mehrere Heizelemente (131) umfasst, die um den Laminierwalzer (140) angeordnet sind.wobei der Laminator (100) zudem eine Tragplatte (180) umfasst, die auf einer Seite des Hauptkörpers (110) in der Nähe des Auslassports (102) angeordnet ist und sich entlang der Ebene erstreckt, in der sich der Auslassport (102) befindet, wobei die Oberfläche der Tragplatte (180) unterhalb des Auslassports (102 liegt.

## Revendications

1. Un laminateur comprenant :
un corps principal (110), dans lequel le corps principal (110) est équipé d'un orifice d'alimentation (101), d'un orifice de décharge (102) et d'un espace de laminage (103) situé entre l'orifice d' alimentation (101) et l'orifice de décharge (102) ;
un rouleau guide (120), disposé sur un côté du corps principal (110), près de la portée d'alimentation (101) ;
un ensemble de chauffage (130), disposé dans l'espace de laminage (103), et configuré pour chauffer un film laminé ainsi qu'une pièce à laminer ; et
un rouleau de laminage (140), dans lequel ce rouleau est disposé dans l'espace de laminage (103) et configuré pour faire rouler et fixer le film laminé ; un espace de préchauffage (104) est en outre prévu entre le rouleau guide (120) et le rouleau de laminage (140) ; cet espace de préchauffage (104) l'air est acheminé vers l'espace de laminage (103) ; l'espace de préchauffage (104) est conçu pour permettre le passage du film laminé et de la pièce à laminer ; la distance h entre le rouleau guide (120) et
le rouleau de laminage (140) est supérieure à une distance prédéfinie H ; un dispositif de commande (150), disposé dans le corps principal (110) et relié au rouleau de laminage (140) ainsi qu'au rouleau guide (120) par un ensemble de pignons (151) ;et le dispositif de commande (150) fait tourner le rouleau de laminage (140) et le rouleau de guidage (120) ; un dispositif de détection de température (160) et un dispositif de commande (170), dans lequel le dispositif de détection de température (160) est intégré au corps principal (110) ; le dispositif de détection de température
(160) détecte une température t dans l'espace de lamination (103) et émet un premier signal é lectrique ; le dispositif de commande (170) est relié électriquement au dispositif de détection de temp érature (160) et au dispositif de commande (150) ; et le dispositif de commande (170) est configuré pour recevoir le premier signal électrique généré par le dispositif de détection de température (160) et ajuster la vitesse de rotation du dispositif de commande (150) en fonction de ce signal.

2. Le laminateur selon la revendication 1, dans lequel le corps principal (110) comprend un élément de montage supérieur (111) et un élément de montage inférieur (112) ; l'élément de montage supérieur (111) étant relié à l'élément de montage inférieur (112) ; l'espace de préchauffage (104) étant formé entre l'élément de montage supérieur (111) et l'élément de montage inférieur (112) ; l'élément de montage supérieur (111) et l'élément de montage inférieur (112) étant chacun équipé d'une plaque conductrice thermique (113) ; ladite plaque conductrice thermique (113) s'étendant le long d'une surface de l'élément de montage supérieur élément de montage (111) et/ou une surface de l'élément de montage inférieur (112) en direction du rouleau de guidage (120) ; l'espace de préchauffage (104) est formé entre les deux plaques conductrices thermiques (113).

3. Le laminateur selon la revendication 2, dans lequel des premières parties de guidage (114) sont disposé es aux extrémités des plaques conductrices thermiques (113), les deux premières parties de guidage (114) s'étendant de manière à être orientées l'une par rapport à l'autre.

4. Le laminateur selon la revendication 2, dans lequel chaque membre de montage supérieur (111) et chaque membre de montage inférieur (112) est équipé d'une plaque guide (115) ; un canal de guidage (105) est formé entre les deux plaques guide (115) ; et ce canal de guidage (105) est opposé à la sortie de décharge (102).

5. Le laminateur selon la revendication 4, dans lequel des secondes parties de guidage (116) sont disposées sur un côté des deux plaques de guidage (115) orientées vers le rouleau de laminage (140), et ces deux parties de guidage (116) s'étendent de manière à être orientées l'une par rapport à l'autre.

6. Le laminateur selon la revendication 1, dans lequel le dispositif de détection de température (160) est en outre configuré pour détecter si la température t dans l'espace de laminage (103) est inférieure à une température prédéfinie T, et pour générer un second signal électrique lorsque cette température est infé rieure à la température prédéfinie T; le dispositif de commande (170) reçoit ce signal électrique et commande l'ensemble de chauffage (130) pour effectuer un chauffage.

7. Le laminateur selon la revendication 1, dans lequel l'ensemble de chauffage (130) comprend plusieurs él éments de chauffage (131), disposés autour du rouleau de laminage (140).

8. Le laminateur selon la revendication 7, comprenant en outre une plaque de support (180), laquelle est disposée sur un côté du corps principal (110) à proximité de la sortie de décharge (102) et s'étend le long du plan où se situe cette sortie, la surface supérieure de la plaque de support (180) étant située en dessous de la sortie de décharge (102).

9. Une méthode de laminage comprenant :
un laminateur (100), comprenant :
un corps principal (110), dans lequel le corps principal (110) est équipé d'un orifice d'alimentation (101), d'un orifice de décharge (102) et d'un espace de laminage (103) situé entre l'orifice d' alimentation (101) et l'orifice de décharge (102) ;
un rouleau guide (120), disposé sur un côté du corps principal (110), près de la portée d'alimentation (101) ;
un ensemble de chauffage (130), disposé dans l'espace de laminage (103), et configuré pour chauffer un film laminé ainsi qu'une pièce à laminer ; et
un rouleau de laminage (140), disposé dans l'espace de laminage (103) ; un espace de préchauffage (104) est en outre prévu entre le rouleau guide (120) et le rouleau de laminage (140), et cet espace de préchauffage (104) est relié à l'espace de laminage.
(103) la distance h entre le rouleau guide (120) et le rouleau de laminage (140) dépasse la distance pré définie H ;
l'injection du film de laminage et de la pièce à laminer le long de la portée d'alimentation (101), où l' ensemble de chauffage (130) chauffe pour faire monter les températures dans l'espace de laminage (103) et dans l'espace de préchauffage (104) ; le rouleau guide (120) oriente le film de laminage et la piè ce à laminer vers l'espace de laminage (103) en passant par l'espace de préchauffage (104) ; et le rouleau de laminage (140) roule et fixe le film de laminage ainsi que la pièce à laminer.le laminateur (100) comprenant en outre un dispositif de commande (150), un dispositif de détection de température (160) et un dispositif de contrôle (170), le dispositif de commande (150) étant intégré dans le corps principal (110) et relié au rouleau de laminage (140) ainsi qu'au rouleau de guidage (120) par un ensemble de pignons (151), et entraînant le rouleau de laminage (140) et le rouleau de guidage (120) en rotation ; le dispositif de détection de température (160) étant intégré dans le corps principal (110).I' appareil de détection de température (160) détecte la température t dans l'espace de laminage (103) et émet un premier signal électrique; l'appareil de commande (170) est relié électriquement à l'appareil de détection de température (160) et à l'appareil de commande (150) ; et l'appareil de commandece (170) est configuré pour recevoir le premier signal électrique généré par le dispositif de détection de température (160) et ajuster la vitesse de rotation du dispositif de commande (150) en fonction de ce signal ; le dispositif de détection de température (160) étant en outre configuré pour détecter si la temp érature t dans l'espace de laminage (103) est inférieure à une température prédéfinie T, et pour générer un second signal électrique lorsque cette température t est inférieure à la température prédéfinie T.et le dispositif de commande (170) reçoit le deuxième signal électrique et commande l'ensemble de chauffage (130) pour effectuer le chauffage.

10. La méthode de lamination selon la revendication 9, dans laquelle le corps principal (110) comprend un élé ment de montage supérieur (111) et un élément de montage inférieur (112) ; l'élément de montage supérieur (111) est relié au membre de montage inférieur (112) ; l'espace de préchauffage (104) est formé entre le membre de montage supérieur (111) et le membre de montage inférieur (112) ; le supérieur Le membre de montage (111) et le membre de montage inférieur (112) sont chacun équipés d'une plaque conductrice thermique (113) ; cette plaque s'étend le long de la surface du membre de montage supérieur (111) et/ou de la surface du membre de montage inférieur (112) en direction du rouleau guide (120) ; l'espace de préchauffage (104) est formé entre les deux plaques conductrices thermiques (113).

11. La méthode de lamination selon la revendication 10, dans laquelle des premières parties de guidage (114) sont disposées aux extrémités des plaques conductrices thermiques (113), les deux premières parties de guidage (114) s'étendant de manière à être orientées l'une vers l'autre ; l'élément de montage supérieur (111) et l'élément de montage inférieur (112) étant chacun équipé d'une plaque de guidage (115) ; un canal de guidage (105) étant formé entre les deux plaques de guidage (115) ; et le canal de guidage (105) étant opposé à la sortie de décharge (102) ;où deux parties de guidage secondaires (116) sont disposées sur un côté des deux plaques de guidage (115) orientées vers le rouleau de laminage (140), et ces deux parties de guidage secondaires (116) s'étendent de manière à être orientées l'une par rapport à l'autre.

12. La méthode de laminage selon la revendication 9, dans laquelle l'ensemble de chauffage (130) comprend plusieurs éléments de chauffage (131), disposés autour du rouleau de laminage (140).le laminateur (100) comprenant en outre une plaque de support (180), cette plaque étant disposée sur un côté du corps principal (110) à proximité de la sortie de décharge (102) et s'étendant le long du plan où se situe ladite sortie, la surface supérieure de la plaque de support (180) étant située en dessous de la sortie de décharge (102).
